# EUROPEAN PATENT APPLICATION

(11) **EP 4 563 447 A1**
(43) Date of publication of application: **04.06.2025**
(21) Application number: 23845701.4
(22) Date of filing: 28.07.2023
(51) Int. Cl.: B62D 21/15, B62D 21/02, B62D 25/08

(54) **VEHICLE**

(30) Priority: 29.07.2022 CN 202210908506
(71) Applicant: BYD Company Limited, Shenzhen, Guangdong 518118 (CN)
(72) Inventor: YANG, Shucheng, Shenzhen, Guangdong 518118 (CN); LIU, Tengyong, Shenzhen, Guangdong 518118 (CN); ZHAO, Yanli, Shenzhen, Guangdong 518118 (CN); YANG, Yanbing, Shenzhen, Guangdong 518118 (CN); LIANG, Darong, Shenzhen, Guangdong 518118 (CN)
(74) Representative: Mathys & Squire
(86) International application number: PCT/CN2023/109870
(87) International publication number: WO 2024/022497

(57) **Abstract**

A vehicle. The vehicle comprises a front longitudinal beam, a subframe and a subframe front mounting point, wherein the subframe front mounting point is connected to the front longitudinal beam, the subframe front mounting point is arranged on the outside of the front longitudinal beam in the widthwise direction of the vehicle, and the subframe is connected to the front longitudinal beam by means of the subframe front mounting point.

## Description

### CROSS-REFERENCE TO RELATED APPLICATIONS

The present disclosure claims priority to Chinese Patent Application No. 202210908506.7, filed on July 29, 2022 and entitled "VEHICLE". The entire content of the above-referenced application is incorporated herein by reference.

### FIELD

The present disclosure relates to the field of vehicle manufacturing technologies, and more specifically, to a vehicle.

### BACKGROUND

During new energy development, vehicle crash safety becomes particularly important. A small overlap frontal crash becomes an important evaluation criteria for rationality of a vehicle compartment structure.

In the related art, a vehicle absorbs energy through deformation of a front longitudinal beam in the event of a collision, to reduce an impact force transmitted to a passenger compartment, and reduce intrusion of a front compartment into the passenger compartment as a result of a structural deformation. However, in the small overlap frontal crash of the vehicle, an overlapping area between the vehicle and a barrier is small, which causes the passenger compartment to still bear a relatively large impact force.

### SUMMARY

The present disclosure is intended to resolve at least one of technical problems existing in the related art. The present disclosure provides a vehicle. The vehicle can better protect a passenger compartment in a small overlap frontal crash.

The vehicle according to an embodiment of the present disclosure includes a front longitudinal beam, a subframe, and a subframe front mounting point. The subframe front mounting point is connected to the front longitudinal beam. In a width direction of the vehicle, the subframe front mounting point is provided on an outer side of the front longitudinal beam. The subframe is connected to the front longitudinal beam through the subframe front mounting point.

According to the vehicle in the embodiments of the present disclosure, the subframe front mounting point is provided on the outer side of the front longitudinal beam in the width direction of the vehicle, so that the subframe can receive a force of a frontal impact or an overlap frontal impact, and a force-bearing area in the width direction of the vehicle is expanded, which increases an overlapping area between the vehicle and a barrier, so that the force can be transmitted more effectively.

In some embodiments, the vehicle further includes a front compartment side beam. In the width direction of the vehicle, the front compartment side beam is connected to an outer side surface of the front longitudinal beam. A first end of the front compartment side beam being provided with the subframe front mounting point.

In some embodiments, a height of the subframe front mounting point in a vertical direction is located below a joint of the front compartment side beam and the front longitudinal beam.

In some embodiments, the front longitudinal beam includes a subframe middle mounting point and a subframe rear mounting point. The subframe is connected to the front longitudinal beam through the subframe middle mounting point and the subframe rear mounting point. An annular force transmission structure is formed among the front longitudinal beam, the front compartment side beam, and the subframe.

In some embodiments, a longitudinal arm of the subframe is an arc-shaped structure.

In some embodiments, the subframe is connected below the front longitudinal beam. A front end and a rear end of the subframe have a constant height to transmit a force along a horizontal direction.

In some embodiments, the vehicle further includes an A-pillar assembly. The front longitudinal beam includes a front longitudinal beam front section and a front longitudinal beam rear section connected to each other. A second end of the front compartment side beam is connected to the A-pillar assembly. The front longitudinal beam front section is connected to the front compartment side beam. The front longitudinal beam rear section is connected to the A-pillar assembly. The front longitudinal beam, the front compartment side beam, and the A-pillar assembly form an annular force transmission structure.

In some embodiments, the front compartment side beam includes a lower side beam. A lower section of the lower side beam is connected to the front longitudinal beam front section. The subframe front mounting point is provided on a lower end of the lower side beam. The subframe rear mounting point is provided in the front longitudinal beam rear section. The front longitudinal beam, the lower side beam, and the subframe form an annular force transmission structure.

In some embodiments, the front compartment side beam further includes an upper side beam. A rear end of the upper side beam is connected to the A-pillar assembly. A front end of the upper side beam is connected to an upper end of the lower side beam. The upper side beam, the lower side beam, the subframe, and the A-pillar assembly form an annular force transmission structure.

In some embodiments, the vehicle further includes a wheel housing mounting plate, a wheel housing front pillar, and a wheel housing rear pillar. The wheel housing mounting plate is connected to the upper side beam. An upper end of the wheel housing front pillar is connected to the wheel housing mounting plate. A lower end of the wheel housing front pillar is connected to the front longitudinal beam. The wheel housing rear pillar is arranged on a rear side of the wheel housing front pillar. An upper end of the wheel housing rear pillar is connected to the wheel housing mounting plate. A lower end of the wheel housing rear pillar is connected to the front longitudinal beam.

In some embodiments, the lower side beam includes a lower side beam body, a lower side beam upper connecting plate, a lower side beam lower connecting plate, and a lower side beam reinforcing plate. The lower side beam upper connecting plate is arranged on an upper end of the lower side beam body and is connected to the front end of the upper side beam. The lower side beam lower connecting plate is arranged on a lower end of the lower side beam body. The lower side beam lower connecting plate is provided with the subframe front mounting point. The lower side beam reinforcing plate and the lower side beam body are connected to the front longitudinal beam.

In some embodiments, the vehicle further includes a cantilever. The subframe is connected to the subframe middle mounting point through the cantilever.

In some embodiments, a bottom surface of the front longitudinal beam rear section is a planar structure. The planar structure is at a same height in an up-down direction of the vehicle.

In some embodiments, a battery pack mounting point is further provided on the bottom surface of the front longitudinal beam rear section. The battery pack mounting point is configured to connect to a battery pack.

In some embodiments, a front end surface of the battery pack and a rear end surface of the subframe are arranged spaced apart.

Specifically, the vehicle further includes a sill beam. Two sill beams are arranged. The two sill beams are respectively arranged on two sides of the vehicle. Each of the sill beams extends along a front-rear direction of the vehicle. Side edges of the battery pack facing the two sides of the vehicle are respectively connected to the two sill beams.

In some embodiments, at least part of an upper cover plate of the battery pack is formed as a vehicle floor.

In some embodiments, battery pack longitudinal beams are arranged in the battery pack. Each of the battery pack longitudinal beams is arranged to extend along the front-rear direction of the vehicle. At least one of the battery pack longitudinal beams is arranged corresponding to the subframe rear mounting point.

In some specific embodiments, in the up-down direction of the vehicle, a height of a lower end surface of the subframe is greater than a height of the battery pack.

In some embodiments, the front longitudinal beam rear section includes a longitudinal beam rear section outer connecting plate, a longitudinal beam rear section inner connecting plate, and a longitudinal beam rear section outer connection sealing plate. The longitudinal beam rear section outer connecting plate is connected to the A-pillar assembly in an overlapping manner. The longitudinal beam rear section inner connecting plate is connected to the longitudinal beam rear section outer connecting plate. The longitudinal beam rear section inner connecting plate is connected to the A-pillar assembly. The longitudinal beam rear section outer connection sealing plate is connected to the A-pillar assembly. The longitudinal beam rear section outer connecting plate, the longitudinal beam rear section inner connecting plate, and the longitudinal beam rear section outer connection sealing plate are connected and form a first reinforcing cavity.

In some embodiments, the vehicle further includes a first cross beam. Two ends of the first cross beam are respectively connected to two A-pillar assemblies oppositely arranged. The first cross beam is further connected to a central channel assembly.

In some embodiments, the front longitudinal beam rear section is connected to the first cross beam.

Specifically, the front longitudinal beam rear section includes a longitudinal beam rear connecting plate and a longitudinal beam sealing plate rear section. The longitudinal beam rear connecting plate is connected to the first cross beam. The longitudinal beam sealing plate rear section is connected to the first cross beam. The longitudinal beam rear connecting plate and the longitudinal beam sealing plate rear section are arranged in a herringbone shape. The longitudinal beam rear connecting plate is configured to transmit an impact force to a side of the central channel assembly through the first cross beam. The longitudinal beam sealing plate rear section is configured to transmit the impact force to a side of the A-pillar assembly through the first cross beam.

In some embodiments, the vehicle further includes a second cross beam. An end portion of the second cross beam is connected to the front longitudinal beam rear section. A middle part of the second cross beam is connected to the central channel assembly. A bottom surface of the second cross beam is flush with a bottom surface of the front longitudinal beam rear section.

In some embodiments, the second cross beam is arranged below the first cross beam.

In some embodiments, the front longitudinal beam rear section is connected to the central channel assembly. The front longitudinal beam rear section includes a subframe rear support plate. The subframe rear support plate is connected to the central channel assembly. The subframe rear mounting point is provided corresponding to the subframe rear support plate. A second reinforcing cavity is defined between the central channel assembly and the second cross beam.

Part of additional aspects and advantages of the present disclosure is provided in the following description. The part becomes apparent from the following description, or is learned through practice of the present disclosure.

### BRIEF DESCRIPTION OF THE DRAWINGS

The above and/or additional aspects and advantages of the present disclosure become apparent and comprehensible from description of embodiments made with reference to the following drawings.
FIG. 1 is a schematic structural diagram of a vehicle according to an embodiment of the present disclosure;
FIG. 2 is a side view of the vehicle according to the embodiment of FIG. 1;
FIG. 3 is a bottom view of the vehicle according to the embodiment of FIG. 1;
FIG. 4 is a schematic structural diagram of a front compartment side beam of the vehicle according to the embodiment of FIG. 1;
FIG. 5 is a schematic structural diagram of a lower side beam of the vehicle according to the embodiment of FIG. 4;
FIG. 6 is a schematic diagram of a connection structure between a front longitudinal beam and an energy absorption box of the vehicle according to the embodiment of FIG. 1;
FIG. 7 is a schematic structural diagram of a first cross beam and a second cross beam of the vehicle according to the embodiment of FIG. 1;
FIG. 8 is a schematic diagram of a partial connection structure between a front longitudinal beam and an A-pillar assembly of the vehicle according to the embodiment of FIG. 1;
FIG. 9 is a schematic diagram of a partial connection structure between a front longitudinal beam and a central channel assembly of the vehicle according to the embodiment of FIG. 1; and
FIG. 10 is a partial schematic structural diagram of a battery pack mounting portion of the vehicle according to the embodiment of FIG. 1.

In the drawings:
Vehicle 100, Energy absorption box 101, Front longitudinal beam 11, First reinforcing cavity 110, Front longitudinal beam rear section 111, Battery pack mounting point 1111, Longitudinal beam rear section outer connecting plate 111a, Longitudinal beam rear section inner connecting plate 111b, Longitudinal beam rear section outer connection sealing plate 111c, Expanding section 112, Longitudinal beam rear connecting plate 113, Longitudinal beam sealing plate rear section 114, Subframe rear support plate 115, Second reinforcing cavity 116, Front longitudinal beam front section 117, Front compartment side beam 12, First end 12a, Second end 12b, Upper side beam 121, Lower side beam 122, Lower side beam body 1221, Lower side beam upper connecting plate 1222, Lower side beam lower connecting plate 1223, Lower side beam reinforcing plate 1224, Reinforcing plate body 1224a, Reinforcing plate flange 1224b, Subframe 13, Subframe front mounting point 131, Subframe middle mounting point 132, Subframe rear mounting point 133, Longitudinal arm 134, Wheel housing mounting plate 14, Wheel housing front pillar 15, Wheel housing rear pillar 16, Cantilever 17, First cross beam 18, A-pillar assembly 19, Central channel assembly 20, Second cross beam 21, Battery pack 200.

### DETAILED DESCRIPTION

Embodiments of the present disclosure are described in detail below, and examples of the embodiments are shown in drawings. Same or similar elements or elements having same or similar functions are denoted by same or similar reference numerals throughout the description. The embodiments described below with reference to the drawings are exemplary and used only for explaining the present disclosure, and cannot be construed as a limitation on the present disclosure.

In the description of the present disclosure, it should be understood that orientation or position relationships indicated by the terms such as "up", "down", "front", "rear", "vertical", "horizontal", "bottom", "inside", and "outside" are based on orientation or position relationships shown in the drawings, and are used only for ease and brevity of illustration and description, rather than indicating or implying that the mentioned apparatus or element needs to have a particular orientation or needs to be constructed and operated in a particular orientation. Therefore, the terms cannot be construed as a limitation on the present disclosure. In addition, features defined by "first" and "second" may explicitly or implicitly include one or more features. In the description of the present disclosure, unless otherwise stated, "multiple" means two or more.

In the description of the present disclosure, it should be noted that, unless otherwise explicitly specified or defined, terms "mount", "connect", and "connection" should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two elements. A person of ordinary skill in the art may understand the specific meanings of the above terms in the present disclosure based on specific situations.

A vehicle 100 according to the embodiment of the present disclosure is described below with reference to the drawings.

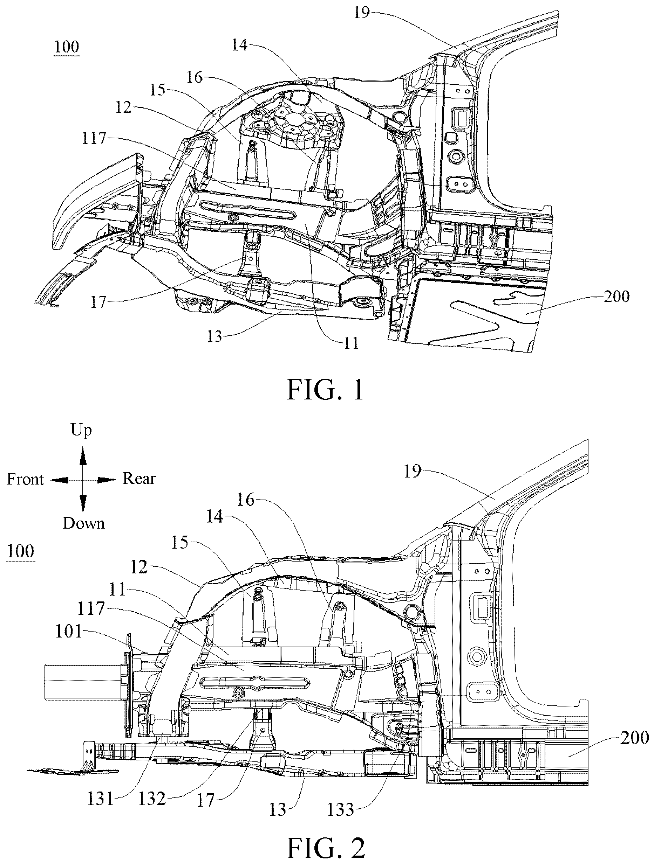

As shown in FIG. 1 and FIG. 2, the vehicle 100 according to the embodiments of the present disclosure includes a front longitudinal beam 11, a subframe 13, and a subframe front mounting point 131. The subframe front mounting point 131 is connected to the front longitudinal beam 11. In a width direction of the vehicle, the subframe front mounting point 131 is provided on an outer side of the front longitudinal beam 11. The subframe 13 is connected to the front longitudinal beam 11 through the subframe front mounting point 131.

It may be understood that, when the vehicle 100 is in a frontal crash or an overlap frontal crash, an overlapping area between the front longitudinal beam 11 and a barrier directly affects an absorption effect of the front longitudinal beam on an impact force. A larger overlapping area between the front longitudinal beam 11 and the barrier leads to a better dispersion and absorption effect of the front longitudinal beam on the impact force.

According to the vehicle 100 in the present disclosure, the subframe front mounting point 131 is provided on the outer side of the front longitudinal beam 11 in the width direction of the vehicle, so that the subframe 13 can receive a force of the frontal crash or the overlap frontal crash, and a force-bearing area in the width direction of the vehicle is expanded, which increases an overlapping area between the vehicle and a barrier, so that the force can be transmitted more effectively.

In some embodiments, as shown in FIG. 1 to FIG. 2 and FIG. 4, the vehicle 100 further includes a front compartment side beam 12. The front compartment side beam 12 is connected to an outer side surface of the front longitudinal beam 11 in the width direction of the vehicle. A first end 12a of the front compartment side beam 12 is provided with the subframe front mounting point 131.

In this way, in the width direction of the vehicle, the front compartment side beam 12 is connected to an outer side surface of the front longitudinal beam 11, so that a structure of the front longitudinal beam 11 extends toward two sides of the vehicle 100, and structural strength of the front compartment side beam 12 and the front longitudinal beam 11 is increased. Therefore, in a small overlap frontal crash of the vehicle 100, overlapping areas between the front compartment side beam 12 and the barrier and between the front longitudinal beam 11 and the barrier can be increased. In this way, an impact force generated by the crash can be directly transmitted to the front compartment side beam 12 and the front longitudinal beam 11. The front longitudinal beam 11 and the front compartment side beam 12 are jointly involved in crumpling and energy adsorption to protect a passenger compartment. Alternatively, the front longitudinal beam and the front compartment side beam form multiple force transmission paths to transmit a force to a vehicle body in a better way.

In some embodiments, referring to FIG. 2, a height of the subframe front mounting point 131 in a vertical direction is located below a joint of the front compartment side beam 12 and the front longitudinal beam 11. In such a structure, the subframe 13 does not interfere with the connection between the front compartment side beam 12 and the front longitudinal beam 11, and a cavity between the front compartment side beam 12 and the front longitudinal beam 11 is increased, so that the overlapping areas between the front compartment side beam 12 and the barrier and between the front longitudinal beam 11 and the barrier can be increased.

In some embodiments, referring to FIG. 2, the front longitudinal beam 11 includes a subframe middle mounting point 132 and a subframe rear mounting point 133. The subframe 13 is connected to the front longitudinal beam 11 through the subframe middle mounting point 132 and the subframe rear mounting point 133. Therefore, the three mounting points cause the connection of the subframe 13 in the vehicle 100 to be relatively stable. In addition, the impact force can be transmitted between the front longitudinal beam 11 and the subframe 13 through the subframe middle mounting point 132 and the subframe rear mounting point 133, so that the impact force borne by the front longitudinal beam 11 and the subframe 13 is relatively uniform, which can avoid a case in which the front longitudinal beam 11 or the subframe 13 bears the concentrated impact force.

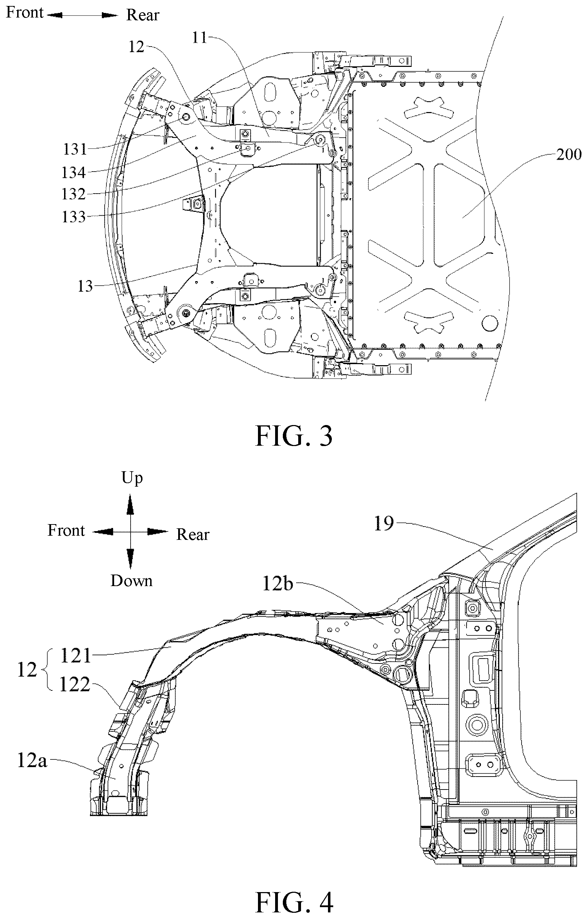

Specifically, referring to FIG. 3, a longitudinal arm 134 of the subframe 13 is an arc-shaped structure. Therefore, the arc-shaped structure has relatively good force transmission capability, to prevent stress concentration, so that the impact force can be transmitted along the longitudinal arm 134 more effectively.

It should be noted that, in the embodiments of FIG. 2 and FIG. 3, the subframe front mounting point 131, the subframe middle mounting point 132, and the subframe rear mounting point 133 are connected to the longitudinal arm 134. The subframe front mounting point 131, the subframe middle mounting point 132, and the subframe rear mounting point 133 are arranged in an arc, and an arrangement direction thereof is consistent with an arc extension direction of the longitudinal arm 134. Therefore, the impact force transmitted by the three mounting points is relatively uniform, which can improve overall connection strength of the subframe 13.

In some embodiments, as shown in FIG. 1, the subframe 13 is connected below the front longitudinal beam 11. A front end and a rear end of the subframe 13 have a constant height to transmit the force along a horizontal direction.

It may be understood that, when the vehicle 100 is in the frontal crash, the vehicle 100 is subject to an impact force in the horizontal direction.

Therefore, the subframe 13 is arranged in such a structure that an extension direction of the subframe 13 is consistent with a direction of the impact force borne by the vehicle 100, so that the subframe 13 can transmit the impact force more effectively, and torsional deformation of the subframe 13 can be reduced.

In some embodiments, as shown in FIG. 1, FIG. 4, and FIG. 8, the vehicle 100 further includes an A-pillar assembly 19. The front longitudinal beam 11 includes a front longitudinal beam front section 117 and a front longitudinal beam rear section 111 connected to each other. A second end 12b of the front compartment side beam 12 is connected to the A-pillar assembly 19. The front longitudinal beam front section 117 is connected to the front compartment side beam 12. The front longitudinal beam rear section 111 is connected to the A-pillar assembly 19. The front longitudinal beam 11, the front compartment side beam 12, and the A-pillar assembly 19 form an annular force transmission structure.

Therefore, the annular structure has a relatively good force bearing capability, so that the front longitudinal beam 11 and the front compartment side beam 12 can bear a relatively large impact force. However, a relatively large cavity is provided inside the annular structure. Therefore, when the front longitudinal beam 11 and the front compartment side beam 12 bear an excessively large impact force, the annular structure may crumple toward the cavity, so as to absorb the impact force, thereby improving absorption effects of the front longitudinal beam 11 and the front compartment side beam 12 on the impact force.

In some embodiments, as shown in FIG. 1 to FIG. 2 and FIG. 4, the front compartment side beam 12 includes a lower side beam 122. A lower section of the lower side beam 122 is connected to the front longitudinal beam front section 117. The subframe front mounting point 131 is provided on a lower end of the lower side beam 122. In addition, the subframe rear mounting point 133 is provided on the front longitudinal beam rear section 111. The front longitudinal beam 11, the lower side beam 122, and the subframe 13 form an annular force transmission structure.

Therefore, the annular structure has a relatively good force bearing capability, so that the front longitudinal beam 11, the lower side beam 122, and the subframe 13 can bear a larger impact force. However, a relatively large cavity is provided inside the annular structure. Therefore, when the front longitudinal beam 11, the lower side beam 122, and the subframe 13 bear the excessively large impact force, the annular structure may crumple toward the cavity, so as to absorb the impact force, thereby improving absorption effects of the front longitudinal beam 11, the lower side beam 122, and the subframe 13 on the impact force.

In some embodiments, the front compartment side beam 12 further includes an upper side beam 121. A rear end of the upper side beam 121 is connected to the A-pillar assembly 19. A front end of the upper side beam 121 is connected to an upper end of the lower side beam 122. The upper side beam 121, the lower side beam 122, the subframe 13, and the A-pillar assembly 19 form an annular force transmission structure.

Therefore, the annular structure has a relatively force bearing capability, so that the front compartment side beam 12 and the subframe 13 can bear a larger impact force. However, a relatively large cavity is provided inside the annular structure. Therefore, when the front compartment side beam 12 and the subframe 13 bear an excessively large impact force, the annular structure may crumple toward the cavity, so as to absorb the impact force, thereby improving absorption effects of the front compartment side beam 12 and the subframe 13 on the impact force.

Therefore, the joint mating of the above three annular structures can increase force bearing capabilities of the front longitudinal beam 11, the front compartment side beam 12, and the subframe 13, improve the absorption effect of the front end of the vehicle 100 on the impact force, and improve torsional stiffness and modality of the vehicle 100, to protect the passenger compartment more effectively.

Specifically, referring to FIG. 1 to FIG. 2, the vehicle 100 further includes a wheel housing mounting plate 14, a wheel housing front pillar 15, and a wheel housing rear pillar 16.

The wheel housing mounting plate 14 is connected to the upper side beam 121. An upper end of the wheel housing front pillar 15 is connected to the wheel housing mounting plate 14. A lower end of the wheel housing front pillar 15 is connected to the front longitudinal beam 11. The wheel housing rear pillar 16 is arranged on a rear side of the wheel housing front pillar 15. An upper end of the wheel housing rear pillar 16 is connected to the wheel housing mounting plate 14. A lower end of the wheel housing rear pillar 16 is connected to the front longitudinal beam 11.

In such a structure, the wheel housing front pillar 15 and the wheel housing rear pillar 16 are both connected between the front longitudinal beam 11 and the wheel housing mounting plate 14, and the wheel housing mounting plate 14 is further connected to the upper side beam 121. Therefore, the arrangement of the wheel housing mounting plate 14, the wheel housing front pillar 15, and the wheel housing rear pillar 16 can perform strengthening support on a force transmission path formed by the front longitudinal beam 11 and the front compartment side beam 12, and improve structural strength of the front longitudinal beam 11 and the front compartment side beam 12. In this way, the annular force transmission structure formed by the front longitudinal beam 11, the front compartment side beam 12, and the A-pillar assembly 19 can bear the larger impact force.

In some embodiments, referring to FIG. 1 to FIG. 2 and FIG. 4 to FIG. 5, the lower side beam 122 includes a lower side beam body 1221, a lower side beam upper connecting plate 1222, and a lower side beam lower connecting plate 1223.

The lower side beam upper connecting plate 1222 is arranged on an upper end of the lower side beam body 1221, and is connected to the front end of the upper side beam 121. The lower side beam lower connecting plate 1223 is arranged on a lower end of the lower side beam body 1221. The lower side beam lower connecting plate 1223 is provided with the subframe front mounting point 131. The lower side beam includes a lower side beam reinforcing plate 1224. The lower side beam reinforcing plate 1224 and the lower side beam body 1221 are connected to the front longitudinal beam 11.

Therefore, the lower side beam upper connecting plate 1222 is connected to the upper side beam 121, so that the subframe 13 is connected to the lower side beam lower connecting plate 1223 through the subframe front mounting point 131, and the lower side beam upper connecting plate 1222 and the lower side beam lower connecting plate 1223 are both connected to the lower side beam body 1221, which can achieve the connection between the front compartment side beam 12 and the subframe 13.

In addition, the lower side beam reinforcing plate 1224 and the lower side beam body 1221 are connected to the front longitudinal beam 11. Therefore, the lower side beam body 1221 is connected to the side beam sealing plate 111, so that the connection between the front compartment side beam 12 and the front longitudinal beam 11 is achieved. In addition, the lower side beam reinforcing plate 1224 is arranged to connect to the front longitudinal beam 11, which can improve structural strength of the joint between the lower side beam 122 and the front longitudinal beam 11.

In some embodiments, the lower side beam reinforcing plate 1224 includes a reinforcing plate body 1224a and a reinforcing plate flange 1224b. The reinforcing plate body 1224a is constructed as an open groove structure, which can improve structural strength of the reinforcing plate body 1224a. However, the reinforcing plate flange 1224b is arranged in the groove structure of the reinforcing plate body 1224a, which can improve structural strength of the lower side beam reinforcing plate 1224, so as to improve overall structural strength of the lower side beam 122. In this way, the lower side beam 122 can bear the larger impact force.

In some embodiments, as shown in FIG. 1, the vehicle 100 further includes a cantilever 17. The subframe 13 is connected to the subframe middle mounting point 132 through the cantilever 17.

In such a structure, the cantilever 17 is connected between the front longitudinal beam 11 and the subframe 13, which can perform strengthening support on the annular force transmission structure formed by the front longitudinal beam 11, the lower side beam 122, and the subframe 13, increase the structural strength of the front longitudinal beam 11, the lower side beam 122, and the subframe 13. In this way, the annular force transmission structure formed by the front longitudinal beam 11, the lower side beam 122, and the subframe 13 can bear the larger impact force.

In some embodiments, a bottom surface of the front longitudinal beam rear section 111 is a planar structure. The planar structure is at a same height in an up-down direction of the vehicle. In such a structure, an extension direction of the bottom surface of the front longitudinal beam rear section 111 is consistent with a direction of the impact force borne by the vehicle 100, so that the front longitudinal beam 11 can bear the impact force more effectively, and torsional deformation generated by the front longitudinal beam 11 is reduced.

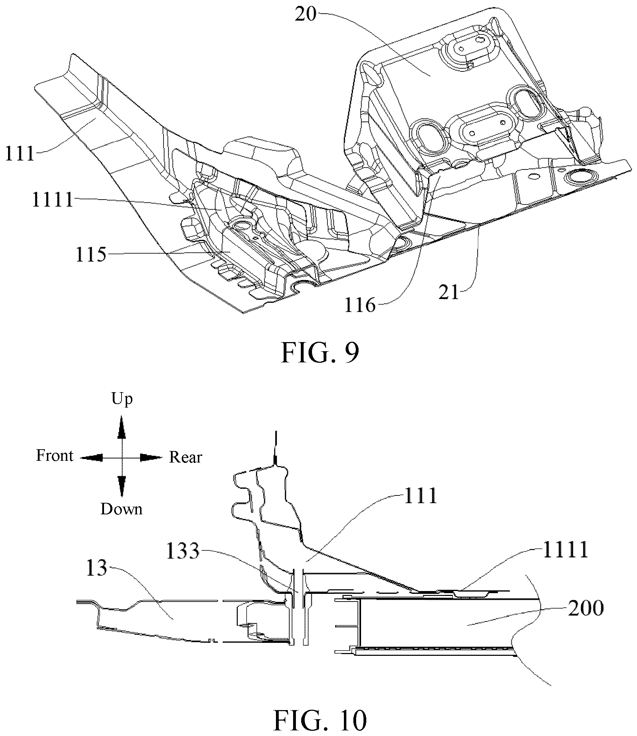

In some embodiments, referring to FIG. 10, a battery pack mounting point 1111 is further arranged on the bottom surface of the front longitudinal beam rear section 111. The battery pack mounting point 1111 is configured to connect to a battery pack 200. In such a structure, a front-side impact force of the subframe 13 can be transmitted to the battery pack mounting point 1111 through the subframe rear mounting point 133, and then is effectively transmitted to the battery pack 200. In this way, the subframe 13 and the battery pack 200 can form a new force transmission path, to disperse the impact force borne by the subframe 13.

In some embodiments, a front end surface of the battery pack 200 and a rear end surface of the subframe 13 are arranged spaced apart. Therefore, the battery pack 200 and the subframe 13 form a specific gap in the horizontal direction, which can prevent the impact force from being directly transmitted to the front end surface of the battery pack 200 through the subframe 13, and ensure that the impact force passes through the subframe rear mounting point 133 and the battery pack mounting point 1111 and then is transmitted to the battery pack 200. In this way, another risk such as fire caused by deformation of the battery pack 200 as a result of the battery pack 200 directly bearing the excessively large impact force is avoided.

In some embodiments, a distance between the front end surface of the battery pack 200 and the rear end surface of the subframe 13 ranges from 10 mm to 100 mm. In this case, the impact force borne by the subframe 13 is not directly transmitted to the front end surface of the battery pack 200. In addition, the impact force has a relatively good transmission effect between the subframe rear mounting point 133 and the battery pack mounting point 1111.

Specifically, the vehicle 100 further includes a sill beam. Two sill beams are arranged. The two sill beams are respectively arranged on the two sides of the vehicle 100. Each of the sill beams extends along a front-rear direction of the vehicle 100. Side edges of the battery pack 200 facing the two sides of the vehicle 100 are respectively connected to the two sill beams.

It may be understood that the impact force borne by the vehicle 100 is transmitted along the front-rear direction of the vehicle 100. The battery pack 200 is connected to the sill beam, so that the impact force borne by the battery pack 200 may be transmitted to the sill beam. However, an extension direction of the sill beam is consistent with the direction of the impact force borne by the vehicle 100, so that the sill beam is not susceptible to torsional deformation when bearing the impact force. In this way, the impact force borne by the battery pack 200 is reduced, and another risk such as fire caused by deformation of the battery pack 200 is avoided.

In some embodiments, at least part of an upper cover plate of the battery pack 200 is formed as a vehicle floor. Therefore, a space in the passenger compartment can be increased while ensuring effective protection of the battery pack 200, to improve riding experience of the vehicle 100. In addition, a setting volume of the battery pack 200 can be further increased, to improve a capacity of the battery pack 200.

In some embodiments, battery pack longitudinal beams are arranged in the battery pack 200. Each of the battery pack longitudinal beams is arranged to extend along the front-rear direction of the vehicle 100. At least one of the battery pack longitudinal beams is arranged corresponding to the subframe rear mounting point 133. Therefore, when the battery pack 200 bears the impact force, the impact force can be transmitted along the front-rear direction of the vehicle 100 through the battery pack longitudinal beam. An extension direction of the battery pack longitudinal beam is consistent with the direction of the impact force borne by the vehicle 100, so that the battery pack longitudinal beam is not susceptible to torsional deformation when bearing the impact force, thereby reducing the impact force borne by the battery pack 200, and protecting the battery pack 200.

In some specific embodiments, referring to FIG. 10, in the up-down direction of the vehicle, a height of a lower end surface of the subframe 13 is greater than a height of the battery pack 200. In such a structure, the subframe 13 is helped directly transmit the force to the battery pack 200.

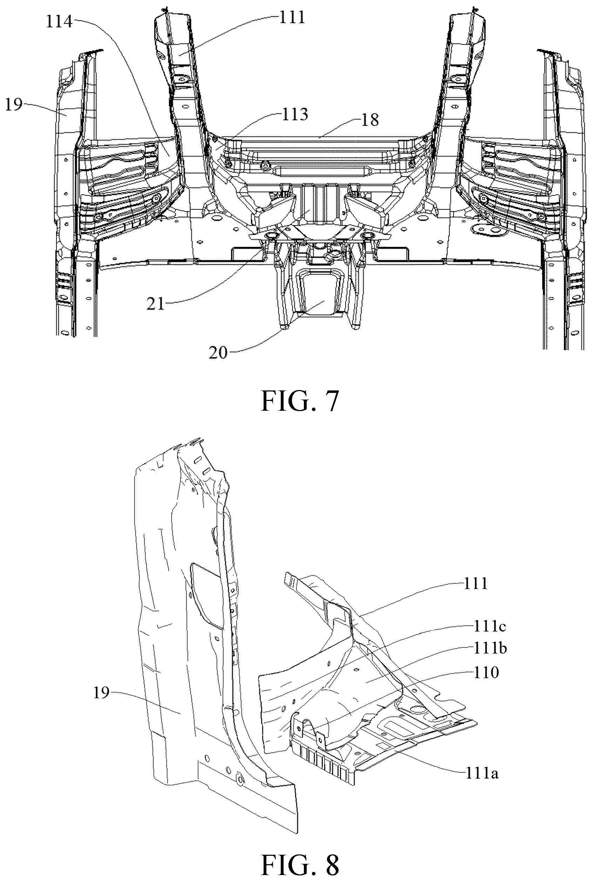

In some embodiments, as shown in FIG. 7 to FIG. 8, the front longitudinal beam rear section 111 includes a longitudinal beam rear section outer connecting plate 111a, a longitudinal beam rear section inner connecting plate 111b, and a longitudinal beam rear section outer connection sealing plate 111c. The longitudinal beam rear section outer connecting plate 111a is connected to the A-pillar assembly 19 in an overlapping manner. The longitudinal beam rear section inner connecting plate 111b is connected to the longitudinal beam rear section outer connecting plate 111a. The longitudinal beam rear section inner connecting plate 111b is connected to the A-pillar assembly 19. The longitudinal beam rear section outer connection sealing plate 111c is connected to the A-pillar assembly 19.

The longitudinal beam rear section outer connecting plate 111a, the longitudinal beam rear section inner connecting plate 111b, and the longitudinal beam rear section outer connection sealing plate 111c are connected and form a first reinforcing cavity 110.

In such a structure, the front longitudinal beam 11 is connected to the A-pillar assembly 19 in an overlapping manner at multiple positions, which can improve reliability of the connection between the front longitudinal beam 11 and the A-pillar assembly 19. Structural strength of the joint between the front longitudinal beam 11 and the A-pillar assembly 19 can be increased through the arrangement of the first reinforcing cavity 110. When the joint bears the excessively large impact force, the first reinforcing cavity 110 can also be involved in crumpling and energy absorption.

In some embodiments, as shown in FIG. 7, the vehicle 100 further includes a first cross beam 18. Two ends of the first cross beam 18 are respectively connected to two A-pillar assemblies 19 oppositely arranged. The first cross beam 18 is further connected to a central channel assembly 20. Therefore, the first cross beam 18 can support the A-pillar assembly 19, to improve structural strength of the A-pillar assembly 19. In addition, an impact force on the first cross beam 18 can be transmitted to the central channel assembly 20, to disperse the impact force borne by the A-pillar assembly 19.

In some embodiments, the front longitudinal beam rear section 111 is connected to the first cross beam 18. Therefore, the impact force borne by the front longitudinal beam 11 can be transmitted to the first cross beam 18 through the front longitudinal beam rear section 111. In this way, the impact force is dispersively transmitted to the A-pillar assembly 19 and the central channel assembly 20 through the first cross beam 18, to disperse the impact force borne by the front longitudinal beam 11, so as to reduce deformation caused by the excessive large impact force borne by the front longitudinal beam 11.

Specifically, the front longitudinal beam rear section 111 includes a longitudinal beam rear connecting plate 113 and a longitudinal beam sealing plate rear section 114. The longitudinal beam rear connecting plate 113 is connected to the first cross beam 18. The longitudinal beam sealing plate rear section 114 is connected to the first cross beam 18.

The longitudinal beam rear connecting plate 113 and the longitudinal beam sealing plate rear section 114 are arranged in a herringbone shape. The longitudinal beam rear connecting plate 113 is configured to transmit the impact force to a side of the central channel assembly 20 through the first cross beam 18. The longitudinal beam sealing plate rear section 114 is configured to transmit the impact force to a side of the A-pillar assembly 19 through the first cross beam 18. Therefore, the impact force borne by the front longitudinal beam 11 can be dispersively transmitted to the central channel assembly 20 and the A-pillar assembly 19, to prevent the central channel assembly 20 or the A-pillar assembly 19 from bearing the concentrated impact force, and prevent the passenger compartment from being collided and invaded as a result of part of the passenger compartment bearing the excessively large impact force.

In some embodiments, as shown in FIG. 7, the vehicle 100 further includes a second cross beam 21. An end portion of the second cross beam 21 is connected to the front longitudinal beam rear section 111. A middle part of the second cross beam 21 is connected to the central channel assembly 20. Therefore, the impact force borne by the front longitudinal beam 11 can be dispersively transmitted to the central channel assembly 20 through the second cross beam 21, which reduces the impact force borne by another position of the passenger compartment, thereby protecting the passenger compartment more effectively. However, a bottom surface of the second cross beam 21 is flush with the bottom surface of the front longitudinal beam rear section 111, so that the impact force transmission at the joint between the front longitudinal beam rear section 111 and the second cross beam 21 can be relatively uniform, which ensures the transmission effect of the second cross beam 21 on the impact force.

In some embodiments, the second cross beam 21 is arranged below the first cross beam 18. In such a structure, the first cross beam 18 and the second cross beam 21 can dispersively bear the impact force borne by the front longitudinal beam 11 and the first cross beam 18 and the second cross beam 21 are at different heights, so that the transmission of the impact force on the first cross beam 18 and the second cross beam 21 is relatively independent, thereby improving the transmission effect of the first cross beam 18 and the second cross beam 21 on the impact force.

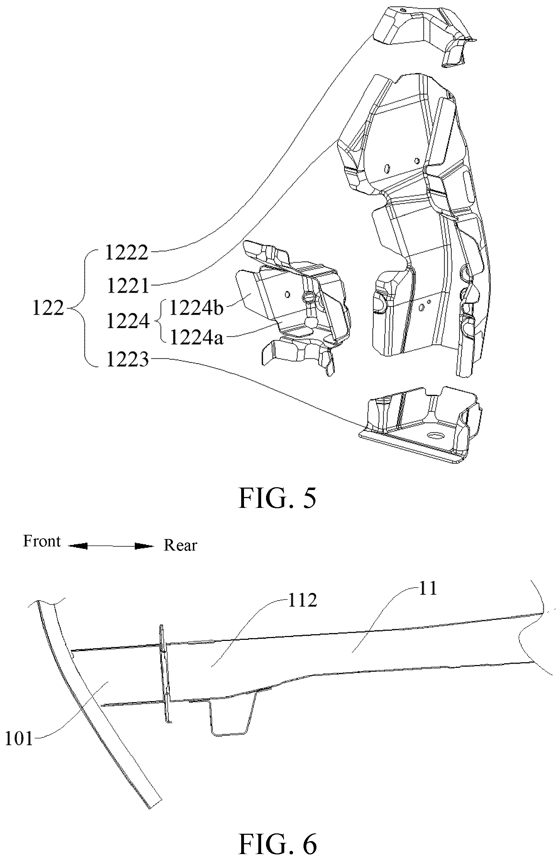

In some embodiments, as shown in FIG. 6, a front end of the front longitudinal beam 11 is an expanding section 112. The expanding section 112 is connected to an energy absorption box 101.

In some embodiments, as shown in FIG. 8 and FIG. 9, the front longitudinal beam rear section 111 is connected to the central channel assembly 20. The front longitudinal beam rear section 111 includes a subframe rear support plate 115. The subframe rear support plate 115 is connected to the central channel assembly 20. The subframe rear mounting point 133 is arranged corresponding to the subframe rear support plate 115. Therefore, the subframe 13 is connected to the subframe rear support plate 115.

In addition, a second reinforcing cavity 116 is defined between the central channel assembly 20 and the second cross beam 21, so that structural strength of a joint between the front longitudinal beam 11 and the tunnel can be increased. When the joint bears the excessively large impact force, the second reinforcing cavity 116 can also be involved in the crumpling and energy absorption.

Other compositions and operations of the vehicle 100 in the embodiments of the present disclosure are known to a person of ordinary skill in the art, and therefore are not described in detail herein.

In the descriptions of this specification, descriptions provided with reference to a term such as "an embodiment", "some embodiments", "an exemplary embodiment", "an example", "a specific example", or "some examples" mean that specific features, structures, materials, or characteristics described with reference to the embodiment or the example are included in at least one embodiment or example of the present disclosure. In the present description, exemplary descriptions of the above terms do not necessarily refer to the same embodiment or example. In addition, the described specific features, structures, materials, or characteristics may be combined in a proper manner in any one or more of the embodiments or examples.

Although the embodiments of the present disclosure are shown and described, a person of ordinary skill in the art may understand that various changes, modifications, replacements, and variations may be made to the embodiments without departing from the principle and spirit of the present disclosure, and the scope of the present disclosure is as defined by the appended claims and their equivalents.

## Claims

1. A vehicle, comprising:
a front longitudinal beam (11);
a subframe (13); and
a subframe front mounting point (131), the subframe front mounting point (131) being connected to the front longitudinal beam (11), and in a width direction of the vehicle, the subframe front mounting point (131) being provided on an outer side of the front longitudinal beam (11); and
the subframe (13) being connected to the front longitudinal beam (11) through the subframe front mounting point (131).

2. The vehicle according to claim 1, further comprising:
a front compartment side beam (12), in the width direction of the vehicle, the front compartment side beam (12) being connected to an outer side surface of the front longitudinal beam (11), and a first end (12a) of the front compartment side beam (12) being provided with the subframe front mounting point (131).

3. The vehicle according to claim 2, wherein a height of the subframe front mounting point (131) in an up-down direction is located below a joint of the front compartment side beam (12) and the front longitudinal beam (11);
the front longitudinal beam (11) comprises a subframe middle mounting point (132) and a subframe rear mounting point (133);
the subframe (13) is connected to the front longitudinal beam (11) through the subframe middle mounting point (132) and the subframe rear mounting point (133); and
an annular force transmission structure is formed among the front longitudinal beam (11), the front compartment side beam (12), and the subframe (13).

4. The vehicle according to any of claims 1 to 3, wherein the subframe (13) is connected below the front longitudinal beam (11); and a front end and a rear end of the subframe (13) have a constant height to transmit a force along a horizontal direction.

5. The vehicle according to claim 3, the vehicle further comprising an A-pillar assembly (19), the front longitudinal beam (11) comprising a front longitudinal beam front section (117) and a front longitudinal beam rear section (111) connected to each other, a second end (12b) of the front compartment side beam (12) being connected to the A-pillar assembly (19), the front longitudinal beam front section (117) being connected to the front compartment side beam (12), the front longitudinal beam rear section (111) being connected to the A-pillar assembly (19), and the front longitudinal beam (11), the front compartment side beam (12), and the A-pillar assembly (19) forming an annular force transmission structure.

6. The vehicle according to claim 5, wherein the front compartment side beam (12) comprises a lower side beam (122); a lower section of the lower side beam (122) is connected to the front longitudinal beam front section (117); the subframe front mounting point (131) is provided on a lower end of the lower side beam (122);
the subframe rear mounting point (133) is provided on the front longitudinal beam rear section (111); and the front longitudinal beam (11), the lower side beam (122), and the subframe (13) form an annular force transmission structure.

7. The vehicle according to claim 6, wherein the front compartment side beam (12) further comprises an upper side beam (121); a rear end of the upper side beam (121) is connected to the A-pillar assembly (19); a front end of the upper side beam (121) is connected to an upper end of the lower side beam (122); and
the upper side beam (121), the lower side beam (122), the subframe (13), and the A-pillar assembly (19) form an annular force transmission structure.

8. The vehicle according to claim 7, the vehicle further comprising:
a wheel housing mounting plate (14), the wheel housing mounting plate (14) being connected to the upper side beam (121);
a wheel housing front pillar (15), an upper end of the wheel housing front pillar (15) being connected to the wheel housing mounting plate (14), and a lower end of the wheel housing front pillar (15) being connected to the front longitudinal beam (11); and
a wheel housing rear pillar (16), the wheel housing rear pillar (16) being arranged on a rear side of the wheel housing front pillar (15), an upper end of the wheel housing rear pillar (16) being connected to the wheel housing mounting plate (14), and a lower end of the wheel housing rear pillar (16) being connected to the front longitudinal beam (11),
wherein the lower side beam (122) comprises:
a lower side beam body (1221);
a lower side beam upper connecting plate (1222), the lower side beam upper connecting plate (1222) being arranged on an upper end of the lower side beam body (1221) and being connected to the front end of the upper side beam (121);
a lower side beam lower connecting plate (1223), the lower side beam lower connecting plate (1223) being arranged on a lower end of the lower side beam body (1221), and the lower side beam lower connecting plate (1223) being provided with the subframe front mounting point (131); and
a lower side beam reinforcing plate (1224), the lower side beam reinforcing plate (1224) and the lower side beam body (1221) being connected to the front longitudinal beam (11).

9. The vehicle according to any of claims 5 to 8, further comprising a cantilever (17), the subframe (13) being connected to the subframe middle mounting point (132) through the cantilever (17).

10. The vehicle according to any of claims 5 to 9, wherein a bottom surface of the front longitudinal beam rear section (111) is a planar structure; and the planar structure is at a same height in an up-down direction of the vehicle.

11. The vehicle according to any of claims 5 to 10, wherein a battery pack mounting point (1111) is further provided on the bottom surface of the front longitudinal beam rear section (111); and the battery pack mounting point (1111) is configured to connect to a battery pack (200).

12. The vehicle according to claim 11, wherein a front end surface of the battery pack (200) and a rear end surface of the subframe (13) are arranged spaced apart; and the vehicle further comprises a sill beam; two sill beams are arranged, the two sill beams are respectively arranged on two sides of the vehicle (100); each of the sill beams extends along a front-rear direction of the vehicle (100); and
side edges of the battery pack (200) facing the two sides of the vehicle (100) are respectively connected to the two sill beams.

13. The vehicle according to claim 11 or 12, wherein at least part of an upper cover plate of the battery pack (200) is formed as a vehicle floor.

14. The vehicle according to any of claims 11 to 13, wherein battery pack longitudinal beams are arranged in the battery pack (200); the battery pack longitudinal beams are arranged to extend along the front-rear direction of the vehicle (100); and at least one of the battery pack longitudinal beams is arranged corresponding to the subframe rear mounting point (133).

15. The vehicle according to any of claims 11 to 14, wherein in the up-down direction of the vehicle (100), a height of a lower end surface of the subframe (13) is greater than a height of the battery pack (200).

16. The vehicle according to any of claims 5 to 15, wherein the front longitudinal beam rear section (111) comprises:
a longitudinal beam rear section outer connecting plate (111a), the longitudinal beam rear section outer connecting plate (111a) being connected to the A-pillar assembly (19) in an overlapping manner;
a longitudinal beam rear section inner connecting plate (111b), the longitudinal beam rear section inner connecting plate (111b) being connected to the longitudinal beam rear section outer connecting plate (111a), and the longitudinal beam rear section inner connecting plate (111b) being connected to the A-pillar assembly (19); and
a longitudinal beam rear section outer connection sealing plate (111c), the longitudinal beam rear section outer connection sealing plate (111c) being connected to the A-pillar assembly (19); and
the longitudinal beam rear section outer connecting plate (111a), the longitudinal beam rear section inner connecting plate (111b), and the longitudinal beam rear section outer connection sealing plate (111c) being connected and forming a first reinforcing cavity (110).

17. The vehicle according to any of claims 5 to 16, further comprising a first cross beam (18), two ends of the first cross beam (18) being respectively connected to two A-pillar assemblies (19) oppositely arranged, and the first cross beam (18) being further connected to a central channel assembly (20).

18. The vehicle according to claim 17, wherein the front longitudinal beam rear section (111) is connected to the first cross beam (18); and the front longitudinal beam rear section (111) comprises:
a longitudinal beam rear connecting plate (113), the longitudinal beam rear connecting plate (113) being connected to the first cross beam (18); and
a longitudinal beam sealing plate rear section (114), the longitudinal beam sealing plate rear section (114) being connected to the first cross beam (18);
the longitudinal beam rear connecting plate (113) and the longitudinal beam sealing plate rear section (114) being arranged in a herringbone shape, the longitudinal beam rear connecting plate (113) being configured to transmit an impact force to a side of the central channel assembly (20) through the first cross beam (18), and the longitudinal beam sealing plate rear section (114) being configured to transmit the impact force to a side of the A-pillar assembly (19) through the first cross beam (18).

19. The vehicle according to claim 17 or 18, the vehicle further comprising a second cross beam (21), an end portion of the second cross beam (21) being connected to the front longitudinal beam rear section (111), a middle part of the second cross beam (21) being connected to the central channel assembly (20), a bottom surface of the second cross beam (21) being flush with a bottom surface of the front longitudinal beam rear section (111), and the second cross beam (21) being arranged below the first cross beam (18).

20. The vehicle according to claim 19, wherein the front longitudinal beam rear section (111) is connected to the central channel assembly (20); the front longitudinal beam rear section (111) comprises a subframe rear support plate (115); the subframe rear support plate (115) is connected to the central channel assembly (20); the subframe rear mounting point (133) is provided corresponding to the subframe rear support plate (115); and
a second reinforcing cavity (116) is defined between the central channel assembly (20) and the second cross beam (21).
